# EUROPEAN PATENT SPECIFICATION

(11) **EP 4 143 657 B1**
(45) Date of publication and mention of the grant of the patent: **28.01.2026**
(21) Application number: 21723156.2
(22) Date of filing: 27.04.2021
(51) Int. Cl.: G05D 16/00, G05D 16/06, F16K 11/00, F28F 27/00, F16K 11/087, F16K 11/20, F28F 27/02, F16K 11/10

(54) **A PRESSURE INDEPENDENT COMMISSIONING UNIT**
DRUCKUNABHÄNGIGE KOMMISSIONIEREINHEIT
UNITÉ DE MISE EN SERVICE INDÉPENDANTE DE LA PRESSION

(30) Priority: 27.04.2020 GB 202006185
(43) Date of publication of application: 08.03.2023
(73) Proprietor: Crane Limited, Ipswich, Suffolk IP3 9FJ (GB)
(72) Inventor: CARPENTER, Gregor MacLeod, Ipswich Suffolk IP3 9FJ (GB)
(74) Representative: Spencer, Michael David
(86) International application number: PCT/EP2021/061031
(87) International publication number: WO 2021/219668

(56) References cited:
- EP-A1- 0 624 761
- AT-B- 400 763
- DE-A1- 102013 107 762
- DE-B4- 10 256 021
- GB-A- 2 573 776
- US-A1- 2002 084 068

## Description

The present invention relates to a pressure independent commissioning unit (PICD) suitable for a direct connection to a heat exchanger (e.g. fan coil unit, chilled beam etc.).

Hydronics are typically provided to buildings using an interconnected pipework system comprising a network of mains supply lines. Such fluids are generally supplied by one or more central sources and are pumped through the pipework system at elevated pressure to ensure that fluid is transmitted across the entire network.

Pressure independent control valves are generally an automatic differential pressure control valve and an automatic flow regulating valve packaged in one valve body. A bonnet mechanism with a characterized regulating plug acts as a flow control valve, and a pressure control cartridge provides automatic pressure regulation to maintain a constant flow of hot or chilled fluid or water. They are used in many closed loop HVAC applications. Systems with pressure independent control valves do not need to be balanced and rebalanced during commissioning. They regulate and maintain a constant flow to the coil as water pressure in the system varies with the changing loads. This delivers greater comfort, increases energy efficiency, reduces actuator operation and reduces expensive call backs. Pressure independent valves allow the system to perform more efficiently with the right flow to heat exchangers.

In variable flow circuits, Differential Pressure Control Valves (DPCV) are used to maintain a constant pressure differential across a sub-branch. This protects downstream control valves from having to operate with excessive pressure differences and neutralises the effects of system pressure variations.

Once a sub-branch has been commissioned, a DPCV prevents interference from other parts of the system, making the commissioning process much easier.

Various functions are currently provided by combining a variety of separate valves within conventional commissioning units. Therefore, it is an aim of this present invention to meet such functions with no additional valves required. It is a further aim that such required functionality can be provided in a suitably compact format.

A previous PICV has been described in EP3483692 which states that the Optima compact PICV having flow regulation and DP control mechanisms are acting from the same direction. This design includes seals (O-rings) between the two mechanisms.

The present invention allows the unit to be fitted directly to heat exchangers with limited footprint such as slimline fan coil units and with no or minimal modifications necessary.

Therefore, the pressure independent commissioning unit may include the following functions, namely:
- ability to direct fluid flow as required for either normal operation, bypass (i.e. maintaining fluid flow through the bypass while simultaneously isolating flow to the heat exchanger) and flow isolation;
- ability to set desired design flow rate via a setting dial on the valve bonnet;
- ability to control flow rate between the set design flow rate and zero measurable flow, via an additional electromechanical actuator attached to the unit;
- ability to control flow independent of fluctuations in system pressure via the inbuilt pressure independent valve element; and
- ability to measure pressure drop over the flow regulating member in order to confirm correct operation and calculate indicated flow rate based on this pressure drop and known valve setting.

Previous proposed pipe and valve connector assembles are described in British Patent 2,573,776A, European Patent 0,624,761A1, and Austrian Patent 400,763B. It is an aim of the present invention to provide a pressure independent commissioning unit suitable for a direct connection to a heat exchanger which combines multiple functions in a single and compact unit.

Accordingly, the present invention is directed to a pressure independent commissioning unit for connection to for example a heat exchanger comprising a H-shaped body bypass arrangement having primary and secondary inlets and outlets, forming the sides of the H-shaped body and communication between them via a bypass forming the centre of the H-shaped body such that the primary inlet can communicate with either the primary outlet or the secondary outlet and the secondary inlet communicates with the secondary outlet; characterised in that the pressure independent commissioning unit contains:
- a single three-way ball valve mechanism connecting the primary inlet, the primary outlet, and the bypass,
- a pressure independent valve connecting the secondary inlet to the bypass, and hence to the secondary outlet (10B) in which the pressure independent valve further comprises a differential pressure control valve,
wherein the fluid flow path through the outlets and inlets can be controlled by rotation of the three-way ball valve mechanism and closing the pressure independent valve.

This structure enables direction of the fluid flow as required for either normal operation, bypass or flow isolation.

This also avoids additional friction between the pressure independent valve element and the flow regulating mechanism. The performance of the pressure independent valve can be more carefully monitored and controlled. Furthermore, the heat exchanger can be easily distributed.

In a further embodiment, the pressure independent valve is equipped with test points for differential pressure measurement mounted on the pressure independent valve.

Advantageously, the pressure independent valve comprises a first test point connected to the secondary inlet before the pressure independent valve and a second test point on the secondary outlet after the pressure independent valve and the bypass.

The test points measure the differential pressure over the plug/seat of the pressure independent valve in order to monitor and/or verify the pressure drop. Based on known typical test data, it is then possible to derive an indicative flow rate based on the above pressure differential in combination with a known valve setting (i.e. recorded dial setting). Additional external test points can also be used for maintenance, if the pressure drop increases it indicates blocking of the coil. They also allow pressure to be monitored during bypass operations.

Preferably, the pressure independent commissioning unit comprises the first and second test points for differential pressure measurement are arranged in the same fluid flow direction of the secondary inlet to the secondary outlet or H-shaped body. This provides the advantage of a compact arrangement and easier accessibility when the unit is fitted to a fan coil or similar heat exchanger.

An example of a pressure independent commissioning unit according to the present invention will now be described herein below with reference to the accompanying drawings, in which:
Figure 1 is a schematic side view of a pressure independent commissioning unit according to the present invention;
Figures 2A, 2B and 2C are cross-sectional views of a pressure independent commissioning unit shown in Figure 1 during three different operations; and
Figure 3 is an enlarged cross-sectional view of the differential pressure control valve shown in Figure 2.

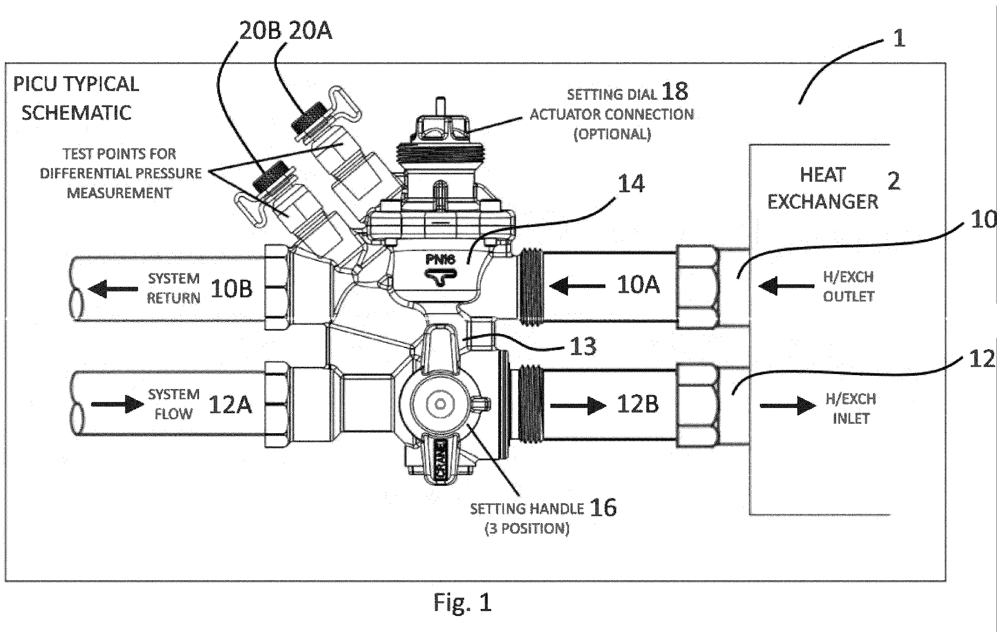

Figure 1 shows a pressure independent commissioning unit 1 connected to a heat exchanger 2 with an H-shaped body bypass arrangement. The H-shaped body bypass arrangement comprises a secondary outlet 10B and a secondary inlet 10A and a primary inlet 12A and primary outlet 12B forming the two sides of the H-shaped body which can be in communication through a bypass 13 located in the centre of the H-shaped body. A differential pressure controller valve 14 (DP controller valve hereinafter) is mounted on the upper part of the bypass 13 of the H-shaped body bypass arrangement whilst a three-way ball valve 16 acted on by a setting handle is mounted connecting the primary inlet 12A and secondary outlet 10B and the lower part of the bypass 13 of the H-shaped body bypass arrangement. The secondary inlet 10A is located between the heat exchanger 2 and the DP controller valve 14 and a secondary outlet 10B located after the DP controller valve 14 and connected to the bypass 13. The return fluid flow from the heat exchanger 2 flows in this direction. The primary inlet 12A is located before the three-way ball valve 16 and a primary outlet 12Bis located between the three-way ball valve 16 and the heat exchanger 2. The fluid flows into the heat exchanger 2 in this direction, that is to say, in the opposite direction compared to the return fluid flow through the secondary inlet/outlet 10A, 10B.

The DP controller valve 14 comprises a bonnet 18 on its top to set a desired flow rate and two test points 20A, 20B for differential pressure measurement which are respectively engaged with the secondary inlet 10A comprising the inlet side of the DP controller valve 14 and the secondary outlet 10B the outlet side. Thus measuring the difference across the DP controller valve 14.

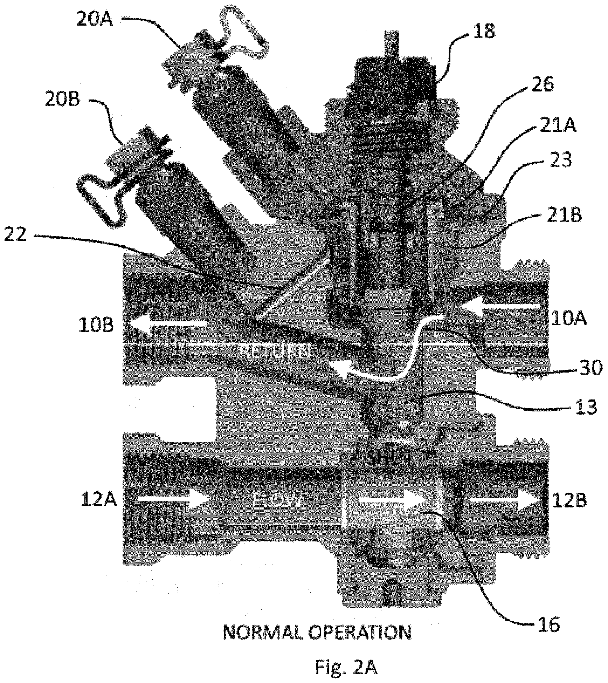

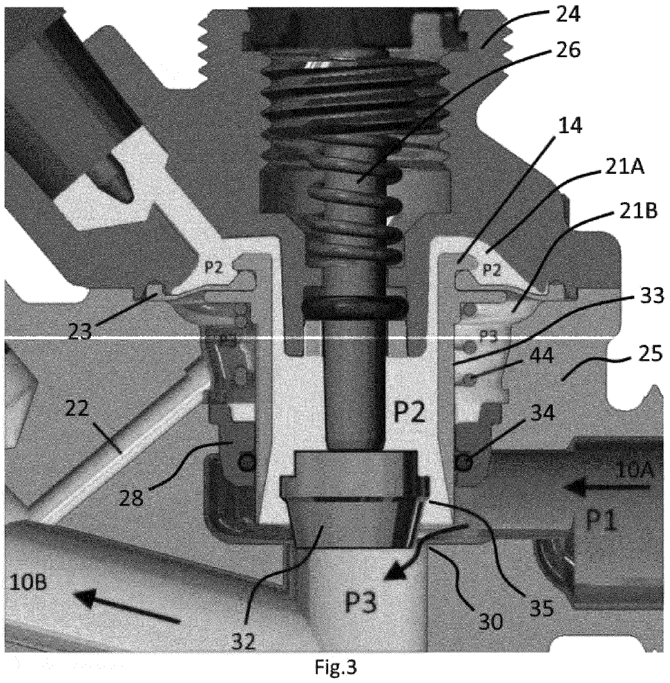

Figure 2A shows a pressure independent commissioning unit 1 shown in Figure 1 in operation. The secondary outlet 10B extending beyond the DP controller valve 14 is connected to the perpendicular bypass 13 which directly connects to the three-way ball valve 16. The DP controller valve 14 will be described in more detail with regard to Figure 3) is equipped with a plug 32 controlled by bonnet 18 through a stem 26 which co-operates with a valve seat 30 to open, close and regulate the DP controller valve 14. Test point 20A is located on the DP controller valve 14 and is connected to the secondary inlet 10A via the DP controller valve 14 whilst test point 20B is located on the secondary outlet 10B after the bypass 13 and the DP controller valve 14. The test points 20A, 20B together enable the measurement of the differential pressure drop over the DP controller valve 14.

In operation, the three-way ball 16 is set in its horizontal position connecting the primary inlet/outlet 12A, 12B. Therefore, the fluid passes through the pressure independent commissioning unit 1 into the heat exchanger 2 through the primary inlet 12A and the primary outlet 12B and the return fluid passes from the heat exchanger 2 through the secondary inlet 10A and the secondary outlet 10B. The return flow is regulated by the DP controller valve 14 with the differential pressure set by the bonnet 18 of the DP controller valve 14.

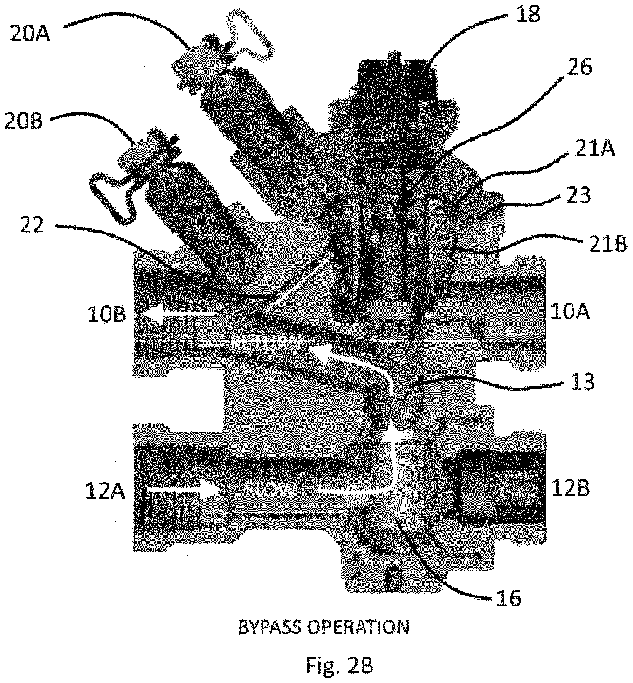

Figure 2B shows a pressure independent commissioning unit 1 shown in Figure 1 during a bypass operation. The fluid from the primary inlet 12A is diverted through bypass 13 to the secondary outlet 10B by rotation of the three-way ball 16 into its longitudinal position. There is no flow regulation or differential pressure control in this operation. The bonnet 18 is set to a closed position by manual adjustment.

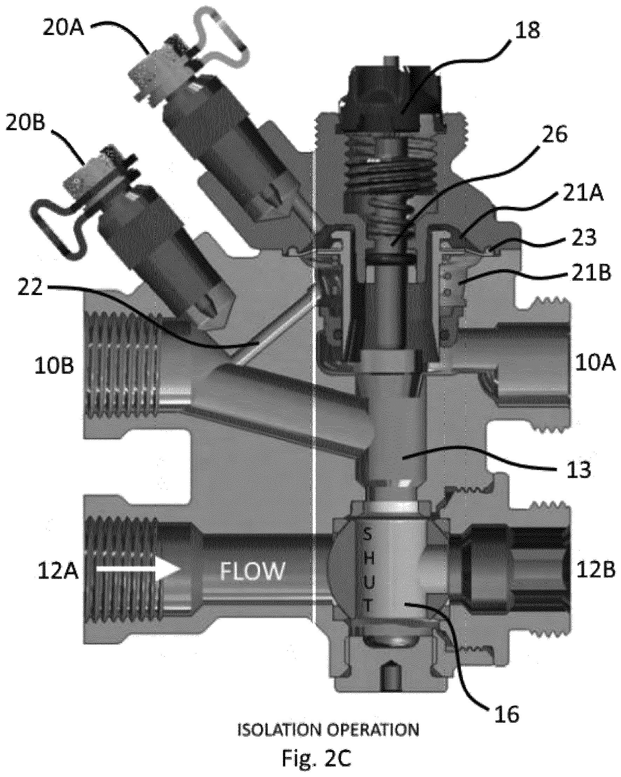

Figure 2C shows a pressure independent commissioning unit 1 shown in Figure 1 during an isolation operation. The three-way ball valve 16 is rotated to isolate the flow located in the primary inlet 12A. There is no flow regulation or differential pressure control in this operation because there is no flow through the three-way ball valve 16.

Figure 3 shows the flow and pressure regulation mechanism which maintains a fixed differential pressure over the DP controller valve 14 in operation. The DP controller valve 14 has a top part or bonnet 24 and a bottom part 25. The top part 24 is part of a bonnet 18 which drives a stem assembly 26 to regulate flow rate upon rotation of the bonnet 18 by the interaction of a plug 32 on the end of the stem assembly 26 and a valve seat 30 on the bottom part 25.

The top and bottom part 24, 25 once joined hold between them a diaphragm 23 which surround the stem assembly 26 defining an upper pressure chamber 21A located in the top part 24 of the DP controller valve 14 and a lower pressure chamber 21B located in the bottom part 25 of the DP controller valve 14. The upper pressure chamber is in communication with the fluid flow before the valve seat 15. The lower chamber is in communication with the fluid flow after the valve seat through the return tube 22 which branches off the secondary outlet 10B. The top part 24 further comprises a test point 20A attached to the upper pressure chamber 21A.

The bottom part 25 of the DP controller valve 14 is equipped with an insert 28 with a circular opening through which the stem 26 passes and is attached in the wall of the secondary inlet 10A above the valve seat 30. The valve plug 32 can shutor set the flow rate through the valve seat 15 of the DP controller valve 14 by actuation via the stem 26 by the bonnet 18 limiting the fluid to go through the DP controller valve 14. The plug 32 in this case has a frustoconical shape for improved performance with an enlarged top lip 35 for sealing. A return tube 22 is connected to the lower pressure chamber 21Blocated in the bottom part 25 of the DP controller valve 14 extending to test point 20B located on the second portion 10B of the outlet pipework 10. Test points 20A and 20B measure the differential pressure between the upper pressure chamber 24 and the lower pressure chamber 25 of the DP controller valve 14.

The bonnet assembly 18 configured as a spring-loaded stem 26 closes and opens the valve seat 30 as required and will set the bonnet pressure drop over the valve. This is part of the pressure independent control valve PICV. The diaphragm 23 is equipped with a shield 33 which surrounds the stem 26 which extends to close the plug 32 on the stem 26. The shield 33 from its top where it is joined to the diaphragm 23 to where it passes form fittingly through the insert 28 in a sealing tight manner due to O-ring 34 forms part of the wall between the upper and lower pressure chambers 21A, 21B. The diaphragm 23 is acted on by a helical spring 44 acting as a biasing member which is seated in the insert 28 and surrounds the shield 33. Thus the pressure difference between the upper and lower pressure chambers moves the shield up and down thus increasing or decreasing the flow of fluid though the DP controller valve 14. The DP controller 14 and the diaphragm 23 are part of the differential pressure control valve (DPCV).

Three pressure zones are located within the DP controller valve 14. Pressure zone P1 which is the highest pressure present inside the valve, is located in the secondary inlet 10A. Pressure zone P2 which is an intermediate pressure, is located inside the DP controller valve 14 in the upper chamber pressure chamber 21A. Pressure zone P3 which is the lowest pressure present in the valve 14, is located in the secondary outlet 10B and via return tube 22 after the DP controller valve 14 is the pressure in the lower pressure chamber 21B. Pressure zone P2 is isolated from P3 by the diaphragm 23 and shield 33, which extends between the test point 20A and the space between the valve plug 32 and the shield 33. Pressure zone P3 is isolated from P1 by the O-ring 34 which seals join between the insert 28 and the shield 33. The interior surface of the pressure responsive valve element is a clearance fit to the flow regulating mechanism, whereby both the fluid pressure is transmitted to the upper surface of the diaphragm and the pressure responsive valve element is free to move over the flow regulating mechanism.

The pressure from the secondary inlet 10A is always connected to the upper pressure chamber 21A acting as a closing force, the pressure in the secondary outlet 10B is always connected to the lower chamber 21B, acting as an opening force.

In the section of the valve illustrated in Figure 3 the fluid flows through the following path:
- the fluid flow enters the valve through the secondary inlet 10A, P1 is the highest pressure present inside this section of the valve;
- the fluid flows through the bypass opening 15 between the DP controller valve 14 and the valve seat 30 to the secondary outlet 10B with the flow setting of the DP controller valve 14 resulting in a predetermined P1 - P3 pressure drop;
- little to no fluid flow in the secondary inlet 10A flows into or out of the upper pressure chamber 21A through the gap between the plug 32 and the shield 33 as it acts as a pressure well, this constriction causes some lowering of the pressure P2 in the upper pressure chamber 21A but P2 is still directly related to P1; and
- some of the fluid flow in the secondary outlet 10B flows into or out of the lower pressure chamber 21B through the return tube 22 thus maintaining the pressure P3 in the lower pressure chamber 21B.

Once set by the position of the valve bonnet assembly 18 and the plug 32/seat 30, the flow rate through the valve 14 is maintained as by the interaction, in the DP controller 14, of the upper and lower pressure chambers 21A, 21B with their respective pressures P2 and P3. The pressure P2 acts in a downwards direction on the upper surface of the diaphragm 23. The pressure P3 acts in an upward manner on the lower surface of the diaphragm 23 assisted by the spring 44. The spring 44 imparts an upwards force. This force gives an equivalent set differential pressure over the diaphragm 23. Therefore, the spring force needs to be overcome by rising pressure P2 in order for the mechanism to become active - this phase is called the activation pressure. In operation, when the inlet pressure increases beyond the activation pressure the shield 33 moves towards the valve seat 30. A restricted flow opening is thus obtained which results in an increased pressure drop P1 - P2.

Beyond the activation pressure, the pressure drop P2 - P3 over the valve plug 32 is mostly constant. This ensures that for a given plug position, the flow is constant from activation to max stated differential pressure (i.e. valve operating differential pressure range). There is a small deviation in spring force over the full motion of the DP controller valve 14 which may result in some system losses (e.g. friction) so P2-P3 is not exactly constant.

As there is a direct relationship between differential pressure and flow rate, by having control over the differential pressure drop between two test points 20A and 20B, control over the flow rate can be performed.

The pressures acting on the diaphragm 23 are P2 vs P3, and P2-P3 is the pressure drop over the valve plug 32. By controlling P2-P3, the constant flow is then maintained.

## Claims

1. A pressure independent commissioning unit comprising a H-shaped body bypass arrangement having primary and secondary inlets (12A; 10A) and outlets (12B; 10B), forming the sides of the H-shaped body and communication between them via a bypass (13) forming the centre of the H-shaped body such that the primary inlet (12A) can communicate with either the primary outlet (12B) or the secondary outlet (10B) and the secondary inlet (10A) communicates with the secondary outlet (10B); **characterised in that** the pressure independent commissioning unit contains:
- a single three-way ball valve mechanism (16) connecting the primary inlet (12A), the primary outlet (12B), and the bypass (13),
- a pressure independent valve connecting the secondary inlet (10A) to the bypass (13), and hence to the secondary outlet (10B) wherein the pressure independent valve further comprises a differential pressure control valve (14),
wherein the fluid flow path through the outlets (12B; 10B) and inlets (12A; 10A) can be controlled by rotation of the three-way ball valve mechanism (16) and closing the pressure independent valve.

2. A pressure independent commissioning unit according to claim 1 further comprising test points (20A; 20B) for differential pressure measurement mounted on the pressure independent valve.

3. A pressure independent commissioning unit according to claim 2, in which a first test point (20A) is connected to the secondary inlet (10A) before the pressure independent valve (14) and a second test point (20B) is connected on the secondary outlet (10B) after the pressure independent valve (14) and the bypass (13).

4. A pressure independent commissioning unit according to Claim 2 or Claim 3 further comprising additional test points for maintenance and for monitoring pressure during bypass operations.

5. A pressure independent commissioning unit according to any one of Claims 2 to 4 comprising test points (20A; 20B) for differential pressure measurement arranged in the same fluid flow direction of the secondary inlet (10A) to the secondary outlet (10B) or H-shaped body.

## Patentansprüche

1. Druckunabhängige Kommissioniereinheit, die eine H-förmige Bypass-Anordnung mit primären und sekundären Einlässen (12A; 10A) und Auslässen (12B, 10B) umfasst, die die Seiten des H-förmigen Körpers bilden, wobei zwischen ihnen eine Verbindung über einen Bypass (13) besteht, der die Mitte des H-förmigen Körpers bildet, so dass der primäre Einlass (12A) entweder mit dem primären Auslass (12B) oder dem sekundären Auslass (10B) in Verbindung stehen kann und der sekundäre Einlass (10A) mit dem sekundären Auslass (10B) in Verbindung steht;
**dadurch gekennzeichnet, dass** die druckunabhängige Kommissioniereinheit enthält:
- einen einzigen Dreiwege-Kugelventilmechanismus (16), der den primären Einlass (12A), den primären Auslass (12) und den Bypass (13) verbindet,
- ein druckunabhängiges Ventil, das den sekundären Einlass (10A) mit dem Bypass (13) und somit dem sekundären Auslass (10B) verbindet, wobei das druckunabhängige Ventil ferner ein Differenzdruckregelventil (14) umfasst, wobei der Fluidströmungsweg durch die Auslässe (12B; 10B) und Einlässe (12A; 10A) durch Drehen des Dreiwege-Kugelventilmechanismus (16) und Schließen des druckunabhängigen Ventils gesteuert werden kann.

2. Druckunabhängige Kommissioniereinheit nach Anspruch 1, die ferner Prüfpunkte (20A; 20B) zur Differenzdruckmessung umfasst, die an dem druckunabhängigen Ventil angebracht sind.

3. Druckunabhängige Kommissioniereinheit nach Anspruch 2, bei der ein erster Prüfpunkt (20A) mit dem sekundären Einlass (10A) vor dem druckunabhängigen Ventil (14) verbunden ist und ein zweiter Prüfpunkt (20B) mit dem sekundären Auslass (10B) nach dem druckunabhängigen Ventil (14) und dem Bypass (13) verbunden ist.

4. Druckunabhängige Kommissioniereinheit nach Anspruch 2 oder 3, die zusätzliche Prüfpunkte für Wartungszwecke und zur Überwachung des Drucks während Bypass-Vorgängen umfasst.

5. Druckunabhängige Kommissioniereinheit nach einem der Ansprüche 2 bis 4, umfassend Prüfpunkte (20A; 20B) zur Differenzdruckmessung, die in derselben Strömungsrichtung des Sekundäreinlasses (10A) zum Sekundärauslass (10B) oder H-förmigen Körper angeordnet sind.

## Revendications

1. Unité de mise en service indépendante de la pression comprenant un agencement de dérivation en forme de corps en H présentant des entrées primaires et secondaires (12A; 10A) et des sorties (12B ; 10B) formant les côtés du corps en H et communiquant entre elles par une dérivation (13) formant le centre du corps en H de telle sorte que l'entrée primaire (12A) peut communiquer avec soit la sortie primaire (12B) soit la sortie secondaire (10B) et l'entrée secondaire (10A) communique avec la sortie secondaire (10B);
**caractérisée en ce que** l'unité de mise en service indépendante de la pression contient :
- une seule vanne à boisseau sphérique trois voies connectant l'entrée primaire (12A), la sortie primaire (12B), et la dérivation (13),
- une vanne indépendante de la pression connectant l'entrée secondaire (10A) à la dérivation (13), et donc à la sortie secondaire (10B) dans laquelle la vanne indépendante de la pression comprend en outre une vanne de régulation de pression différentielle (14),
dans laquelle le trajet d'écoulement de fluide à travers les sorties (12B ; 10B) et les entrées (12A ; 10A) peut être contrôlé par la rotation du mécanisme de la vanne à boisseau sphérique trois voies (16) et la fermeture de la vanne indépendante de la pression.

2. Unité de mise en service indépendante de la pression selon la revendication 1, comprenant en outre des points de test (20A ; 20B) pour la mesure de la pression différentielle, montés sur la vanne indépendante de la pression.

3. Unité de mise en service indépendante de la pression selon la revendication 2, dans laquelle un premier point de test (20A) est connecté à l'entrée secondaire (10A) avant la vanne indépendante de la pression (14) et un second point de test (20B) est connecté à la sortie secondaire (10B) après la vanne indépendante de la pression (14) et la dérivation (13).

4. Unité de mise en service indépendante de la pression selon la revendication 2 ou 3, comprenant en outre des points de test supplémentaires pour la maintenance et la surveillance de la pression pendant les opérations de dérivation.

5. Unité de mise en service indépendante de la pression selon l'une quelconque des revendications 2 à 4, comprenant des points de test (20A ; 20B) pour la mesure de la pression différentielle, disposés dans la même direction d'écoulement du fluide que les sorties/entrées (12B; 10B ; 12A; 10A) ou le corps en H.
